# EUROPÄISCHE PATENTSCHRIFT

(11) **EP 1 404 625 B1**
(45) Veröffentlichungstag und Bekanntmachung des Hinweises auf die Patenterteilung: **01.12.2004**
(21) Anmeldenummer: 02730050.8
(22) Anmeldetag: 22.03.2002
(51) Int. Cl.: C03C 17/00, C03C 17/04, C03C 17/22, C23C 4/04

(54) **STREULICHTSCHICHT UND VERFAHREN ZUR HERSTELLUNG EINER SOLCHEN, INSBESONDERE ZUR BESCHICHTUNG VON GLAS ODER GLASKERAMIKEN**
LIGHT-SCATTERING LAYER AND METHOD FOR PRODUCING THE SAME, PARTICULARLY FOR COATING GLASS OR GLASS CERAMIC MATERIALS
COUCHE DE LUMIERE DIFFUSEE ET PROCEDE PERMETTANT DE LA PRODUIRE, NOTAMMENT POUR RECOUVRIR DU VERRE OU DE LA VITROCERAMIQUE

(30) Priorität: 10.05.2001 DE 10122718
(43) Veröffentlichungstag der Anmeldung: 07.04.2004
(73) Patentinhaber: SCHOTT AG, 55122 Mainz (DE)
(72) Erfinder: SCHULTHEIS, Bernd, 55270 Schwabenheim an der Selz (DE); KRAUSE, Cora, 76835 Burrweiler (DE); WERMBTER, Karsten, 55257 Budenheim (DE)
(74) Vertreter: Gahlert, Stefan, Dr.-Ing.
(86) Internationale Anmeldenummer: PCT/EP2002/003269
(87) Internationale Veröffentlichungsnummer: WO 2002/090280

(56) Entgegenhaltungen:
- DE-A- 4 013 758
- GB-A- 1 547 530
- US-A- 5 300 349
- US-A- 6 037 572
- HARMATHY P F ET AL: "FLAMMSPRITZEN EIN MODERNES BESCHICHTUNGSVERFAHREN" TECHNISCHE RUNDSCHAU, HALLWAG VERLAG. BERN, CH, Bd. 84, Nr. 25, 19. Juni 1992 (1992-06-19), Seiten 52-55, XP000280903 ISSN: 1023-0823

## Beschreibung

Die Erfindung betrifft ein Verfahren zur Erzeugung einer Streulichtschicht auf einem transparenten Körper aus Glas oder Glaskeramik.

Es ist bekannt, auf Glaskeramik-Kochflächen organische Farben aufzubringen, die auf einer genoppten Unterseite der Glaskeramik-Kochfläche aufgedruckt werden. Diese Beschichtung soll einen seitlichen Lichtaustritt insbesondere bei Verwendung von Halogen-Strahlungsheizkörpern verhindern. Hierzu wird üblicherweise eine schwarze Farbe verwendet, die lediglich eine Temperaturbeständigkeit von maximal etwa 250 °C (Dauerbeständigkeit) bzw. von maximal etwa 350 °C (Kurzzeitbeständigkeit) besitzt. Daher ist es notwendig, den Heißbereich über den Heizelementen auf jeden Fall bei der Beschichtung auszusparen.

Keramische Farben, wie sie üblicherweise zur Dekoration der Oberseite von Glaskeramik-Kochflächen verwendet werden, scheiden auf der Unterseite eines Glaskeramik-Kochfeldes aus, da sie nach dem Einbrennen die mechanische Festigkeit derart reduzieren, daß eine ausreichende Stoßfestigkeit nicht mehr gegeben ist. Die Stoßfestigkeit sinkt hierbei meist auf Werte unterhalb von 0,5 Newtonmeter ab.

Aus der US 6 037 572 ist es grundsätzlich bekannt, Keramikpartikel durch thermisches Spritzen auf eine Oberfläche aus Glaskeramik aufzutragen.

DE 40 13 758 A offenbart die Verwendung eines Pulverflammspritzverfahrens zum Auftragen von glasigen, teilkristallinen, kristallinen, weissen, farbigen oder farblosen, transparenten, halbdeckenden oder deckenden Glasschichten auf Wirtschaftsglas, wobei das Glassubstrat auf ca. 500 - 600°C aufgeheizt wird.

Jedoch ist diese so hergestellte Keramikschicht lediglich als Isolierschicht bei Glaskeramik-Kochfeldern vorgesehen, die mit einer Kontaktheizung auf der Unterseite der Glaskeramikplatte versehen sind. Eine solche Isolierschicht ist bei Kontaktbeheizung erforderlich, da der elektrische Widerstand von Glaskeramik mit zunehmender Temperatur abnimmt (NTC-Verhalten). Eine solchermaßen hergestellte Isolierschicht weist somit eine hohe Schichtdicke in der Größenordnung von einigen Hundert Mikrometern auf und ist bezüglich der Isoliereigenschaften optimiert. Ferner ergibt sich beim Auftragen von Keramikpartikeln durch thermisches Spritzen auf eine Glas- oder Glaskeramikoberfläche ein Haftungsproblem. Es hat sich nämlich gezeigt, daß die sonst übliche Vorbehandlung der zu beschichtenden Oberfläche durch Aufrauhstrahlen nicht möglich ist, da hierdurch die mechanische Stabilität der Glas -bzw. Glaskeramikoberfläche beeinträchtigt wird.

Der Erfindung liegt somit die Aufgabe zugrunde, ein Verfahren zur Erzeugung einer Streulichtschicht auf einem transparenten körper aus Glas oder Glaskeramik anzugeben, das die Nachteile des Standes der Technik vermeidet und insbesondere eine gute mechanische und thermische Stabilität liefert. Des weiteren soll die Streulichtschicht auf möglichst einfache und kostengünstige Weise erzeugbar sein und in ihren optischen Eigenschaften möglichst im Hinblick auf verschiedene Anforderungen anpaßbar sein.

Diese Aufgabe wird durch das Verfahren gemäß Anspruch 1 gelöst.

Die Aufgabe der Erfindung wird auf diese Weise vollkommen gelöst.

Es hat sich nämlich gezeigt, daß ein derartige hergestellter Schichtaufbau eine gute Haftung der Streulichtschicht auf dem darunter liegenden Werkstoff aufweist, auf einfache Weise durch thermisches Spritzen herstellbar ist und in weiten Grenzen an die jeweiligen Anforderungen anpaßbare Eigenschaften aufweist.

Durch die Begrenzung der Schichtdicke auf maximal etwa 100 µm werden ferner gleichermaßen Haftungsprobleme vermieden und einer möglichen Delamination der Schicht entgegengewirkt.

Im Unterschied zu den durch thermisches Spritzen aufgetragenen Keramikschichten, die als Isolierschichten bei der Herstellung von direkt beheizten Keramik-Kochfeldern dienen, kann ein weiter Bereich von Materialien zur Erzeugung der Streulichtschicht verwendet werden, wobei lediglich versucht werden muß, durch eine gewisse Anpassung des thermischen Ausdehnungskoeffizienten an das Ausdehnungsverhalten des beschichteten Körpers (thermischer Ausdehnungskoeffizient von Glaskeramik nahe bei Null) zu erreichen.

Es kommt somit ein breiter Bereich von Keramikmaterialien in Frage, wozu unter anderem Aluminiumoxid, Titanoxid, Bornitrid, Zirkonoxid, Siliziumnitrid oder Mischungen hiervon gehören.

Insbesondere mit Aluminiumoxid und Titanoxid ergibt sich eine besonders gute Haftung der aufgebrachten Streulichtschicht auf der Oberfläche des beschichteten Körpers. Während Titanoxid insbesondere zur Erzeugung von opaken Schichten geeignet ist, da Titanoxid eine weiße Färbung besitzt, eignet sich Aluminiumoxid sowohl zur Herstellung von transluzenten Streulichtschichten, sofern eine geringere Schichtdicke gewählt wird, als auch zur Herstellung von opaken Schichten, wenn eine größere Schichtdicke gewählt wird.

Zur Herstellung einer opaken Streulichtschicht eignen sich Schichtdicken von mindestens etwa 20 µm vorzugsweise eine Schichtdicke von etwa 30 bis 60, insbesondere eine Schichtdicke von etwa 40 bis 50 µm.

Soll dagegen eine transluzente Streulichtschicht erzeugt werden, so sollte die Schichtdicke vorzugsweise weniger als 20 µm betragen.

Je nach der gewünschten Färbung und den sonstigen optischen Eigenschaften der Streulichtschicht können zu deren Herstellung auch farbige Partikel verwendet werden, wie etwa Eisenoxid-Partikel, oder es können Farbpartikel lediglich beigemischt werden. So können beispielsweise zu Aluminiumoxid oder Titanoxid, das eine besonders gute Haftung auf einer Glas-oder Glaskeramikoberfläche aufweist, Farbpigmente zugemischt werden.

Ferner kann den Partikeln Pulver aus gemahlenem Glas oder gemahlener Glaskeramik zugesetzt werden, soweit die so erhaltene Mischung noch thermisch spritzbar ist. Vorzugsweise kann hierbei das Pulver auch Recyclingmaterial hergestellt sein.

Um eine gute Haftung der Streulichtschicht auf der Oberfläche des beschichteten Körpers zu erreichen, wird dieser vor der Beschichtung auf eine Temperatur von 200 bis 450 °C aufgeheizt, bevor die Partikel aufgespritzt werden. Insbesondere bei Glaskeramiken, wie etwa Ceran® von Schott , läßt sich in diesem Temperaturbereich eine besonders gute Haftung der aufgespritzten Keramikschicht gewährleisten.

Der Körper wird auf eine Temperatur unterhalb der Glastemperatur des Körpers vorgewärmt, da darüber die Formstabilität beeinträchtigt wird.

Zur Vorheizung des zu beschichtenden Körpers vor dem Aufspritzen der Partikel kann ein vorgeschalteter Glühprozeß genutzt werden, der während der Herstellung des Körpers ohnehin anfällt.

Auf diese Weise wird ein besonders energiesparender Prozeß erreicht.

So kann sich beispielsweise das Aufspritzen der Partikel unmittelbar an eine Wärmebehandlung im Kristallisationsofen bei der Herstellung einer Glaskeramik anschließen oder an einen Glühprozeß im Vorspannofen bei der Herstellung von vorgespanntem Flachglas. Ferner ist es denkbar, zur Vorheizung den Prozeß der Heißformgebung bei der Herstellung von GK-Grünglas zu nutzen, oder aber den Floatprozeß (z.B. Borofloat) bei der Flachglasherstellung. Die Austrittstemperaturen liegen dabei üblicherweise im Bereich zwischen 450 und 700 °C.

Soweit nur Teile der Oberfläche mit der Streuschicht versehen werden sollen, können andere, nicht zu beschichtende Teile, durch ein Maskierverfahren abgedeckt werden, bevor die Keramikartikel aufgespritzt werden.

Zum thermischen Spritzen wird bevorzugt ein Plasmaspritzverfahren oder ggf. ein Flammspritzverfahren verwendet.

Je nach Verfahrensführung und den verwendeten Spritzparametern lassen sich die Eigenschaften der so hergestellten Streulichtschicht beeinflussen. Beim Auftreffen werden die Partikel infolge der hohen kinetischen Energie zu linsenförmigen Blättchen (Splats) verformt. Die Partikelgröße ergibt sich meist in einem Bereich zwischen etwa 5 und 30 µm, wobei die mittlere Partikelgröße meist im Bereich zwischen 1 und 20 µm liegt. Jedoch läßt sich die Partikelgröße zusätzlich durch die gewählten Betriebsparameter während dieses Beschichtungsprozesses beeinflussen.

Geringe Schichtdicken in der Größenordnung von bis zu etwa 10 µm können während eines einzigen Spritzvorgangs erzielt werden. Darüber hinausgehende Schichtdicken werden in der Regel nacheinander in mehreren Schichten aufgetragen.

Weitere Merkmale und Vorteile der Erfindung ergeben sich aus der nachfolgenden Beschreibung bevorzugter Ausführungsbeispiele unter Bezugnahme auf die Zeichnung.

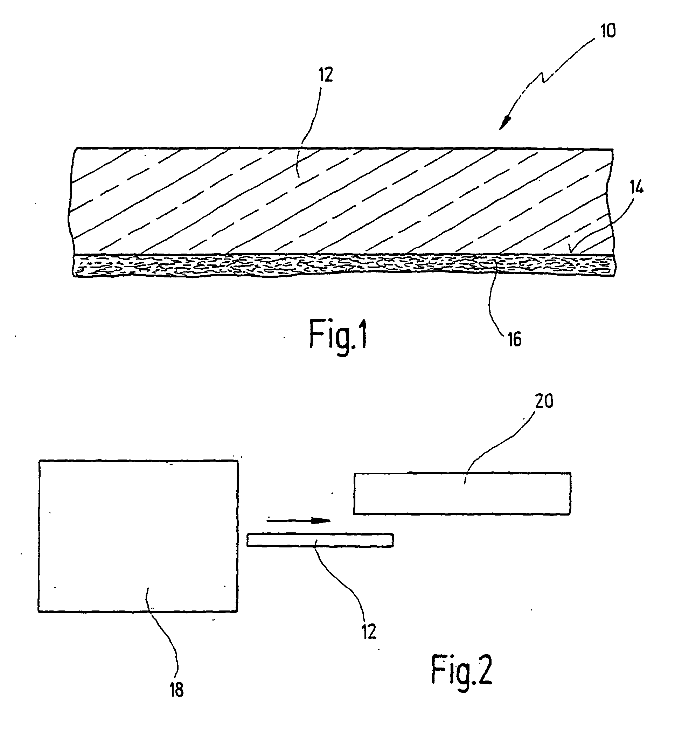

In Figur 1 ist ein Ausschnitt aus einem plattenförmigen Körper 12, der aus der Glaskeramik Ceran®, der von der Firma Schott hergestellt wird, im Querschnitt dargestellt. Dieser Körper 12 ist an einer seiner Oberflächen 14 mit einer dünnen plasmagespritzten Schicht 16 aus Al₂O₃ versehen. Der so hergestellte Körper ist insgesamt mit der Ziffer 10 bezeichnet.

Es versteht sich, daß die Darstellung gemäß Figur 1 rein beispielhafter Natur ist und insbesondere nicht maßstabsgerecht ist.

Während die Dicke des plattenförmigen Körpers 12 in der Regel mindestens mehrere Millimeter (typischerweise etwa 4 bis 6 Millimeter) oder mehr beträgt, beträgt die Dicke der durch thermisches Spritzen aufgetragenen Schicht 16 in der Regel weniger als 100 µm.

Die Schicht 16 besteht aus Keramikmaterial, beispielsweise aus Aluminiumoxid, Titanoxid, Bornitrid, Zirkonoxid, Siliziumnitrid oder Mischungen hiervon. Soweit gewünscht, können diesen Materialien zusätzlich noch Farbpigmente, z.B. Fe₂O₃-Partikel zugesetzt sein.

Durch die hohe kinetische Energie während des Beschichtungsprozesses werden die aufgetragenen Partikel linsenartig verformt, so daß sich sogenannte Splats ergeben.

Da die Schicht 16 somit aus einer Vielzahl von Einzelpartikeln besteht, wirkt diese Schicht als Streulichtschicht. Die Partikelgrößen liegen in der Regel in einem Bereich von etwa 1 bis 20 µm, wobei sich typischerweise meist ein Median von etwa 5 µm ergibt, wobei 90% der Partikel einen Durchmesser von kleiner 30 µm aufweisen können.

Je nach verwendetem Ausgangsmaterial und je nach Wahl der Prozeßparameter während des thermischen Spritzvorgangs können diese Partikelgrößen jedoch beeinflußt werden.

Sofern die Streulichtschicht 16 opak sein soll, wird diese mit einer Schichtdicke von mehr als 20 µm, typischerweise mit einer Schichtdicke von etwa 40 bis 50 µm aufgetragen. Ist dagegen eine transluzente Streulichtschicht 16 erwünscht, so wird eine Schichtdicke von weniger als 20 µm, beispielsweise etwa 10 bis 15 µm bevorzugt. Die Opakizität bzw. die Transluzenz der Schicht 16 wird natürlich zusätzlich von der Art des verwendeten Schichtmaterials beeinflußt.

Während eine Schicht aus Aluminumoxid auch bei relativ geringen Schichtdicken transluzent ist, weist beispielsweise eine Schicht aus Titanoxid eine stärkere Opakizität auf, da Titanoxid von Natur aus eine weißliche Farbe besitzt.

Eine gute Haftung der Streulichtschicht 16 auf der Oberfläche 14 des Körpers 12 wird durch mehrere Maßnahmen gewährleistet.

Zum Einen sollten sich die thermischen Ausdehnungskoeffizienten des Materials, aus dem die Streulichtschicht 16 besteht, und des Materials, aus dem der Körper 12 besteht, nicht allzusehr unterscheiden, um thermisch bedingte Spannungen möglichst gering zu halten.

Insbesondere, wenn der Körper 12 aus Glaskeramik besteht, die einen Ausdehnungskoeffizienten von nahe null besitzt, sollte somit die Streulichtschicht 16 aus einem Material hergestellt sein, dessen thermischer Ausdehnungskoeffizient relativ gering ist.

Es hat sich gezeigt, daß insbesondere Aluminiumoxid und Titanoxid von ihrem thermischen Ausdehnungskoeffizienten her geeignet sind und auch aufgrund ihrer chemischen Eigenschaften eine gute Haftung auf der Oberfläche von Gläsern und Glaskeramiken besitzen.

Des weiteren wird die Haftung der Streulichtschicht 16 und die Langzeitstabilität auch bei thermischer Wechselbelastung dadurch erheblich verbessert, in dem der Körper 12 vor der Beschichtung vorgeheizt wird, wobei sich bei der Beschichtung von Glaskeramik insbesondere Temperaturen im Bereich von etwa 200 bis 450 °C als besonders vorteilhaft erwiesen haben.

Schließlich trägt die geringe Streulichtdicke der Streulichtschicht 16 zu der guten Haftung bei, während sich bei größeren Schichtdicken thermisch bedingte Spannungen infolge von Unterschieden zwischen den thermischen Ausdehnungkoeffizienten erheblich stärker auswirken und insbesondere Rißbildungen auftreten können oder Delaminationen im Randbereich der Beschichtung.

Vorzugsweise schließt sich der Beschichtungsprozeß unmittelbar an einen vorangehenden Glühprozeß während der Herstellung des Körpers 12 an, um so einen möglichst energiesparenden Betrieb zu gewährleisten. Wie in Figur 2 schematisch dargestellt, könnte sich somit beispielsweise die Beschichtung einer Glaskeramikplatte aus Ceran® in einem Plasmabrenner 20 unmittelbar an die Wärmebehandlung des Körpers 12 in einem Kristallisationsofen 18 anschließen, in dem die Teilkristallisation des Lithium-Basisglases bei der Herstellung der Glaskeramik erreicht wird.

Es versteht sich, daß die Wärmebehandlungsschritte der verschiedenartigsten Herstellungsprozesse energiesparend genutzt werden können, um unmittelbar im Anschluß hieran den Beschichtungsprozeß durchführen zu können.

Es ergeben sich die verschiedenartigsten Anwendungsbereiche, beispielsweise als transparente, nicht eingefärbte Glaskeramik-Kochflächen mit einer Streulichtschicht auf der Unterseite, die weiß oder farbig erscheint, oder transparente, eingefärbte Glaskeramik-Kochflächen aus Ceran® mit Streulichtschicht auf der Unterseite, vorgespanntes Kalknatronglas, das beispielsweise für Bedienpanel, Backofenscheiben mit Bereichen verringerter Durchsicht eingesetzt werden kann, Kaminsichtscheiben aus Glaskeramik mit Bereichen verminderter Durchsicht, oder Herdsichtscheiben aus Glaskeramik.

Sofern dies gewünscht ist, kann die Beschichtung auch lediglich auf Teilbereichen erzeugt werden, wozu vor der Aufbringung der Beschichtung, die hiervon auszusparenden Bereiche in einem Maskierverfahren mit einer Abdeckschicht beschichtet werden, die nach dem thermischen Spritzen wieder entfernt wird.

## Patentansprüche

1. Verfahren zur Erzeugung einer Streulichtschicht auf einem transparenten Körper (12) aus Glas oder Glaskeramik, bei dem optisch streuende Partikel auf eine Oberfläche (14) des Körpers (12) aufgebracht werden, wobei die Partikel aus Keramik, Glas oder Glaskeramik bestehen und mit einer Schichtdicke von höchstens 100 µm durch thermisches Spritzen auf den Körper (12) aufgetragen werden, **dadurch gekennzeichnet, dass** der Körper auf eine Temperatur von 200 bis 450°C, jedoch unterhalb der Glastemperatur des Körpers (12) aufgeheizt wird, bevor die Streulichtschicht aufgetragen wird.

2. Verfahren nach Anspruch 1, **dadurch gekennzeichnet, dass** die Partikel zur Erzeugung einer opaken Streulichtschicht mit einer Schichtdicke von mindestens 20 µm, vorzugsweise mit einer Schichtdicke von 30 bis 60, insbesondere mit einer Schichtdicke von 40 bis 50 µm aufgetragen werden.

3. Verfahren nach Anspruch 1, **dadurch gekennzeichnet, dass** die Partikel zur Erzeugung einer transluzenten Streulichtschicht (16) mit einer Schichtdicke von weniger als 20 µm aufgetragen werden.

4. Verfahren nach einem der vorhergehenden Ansprüche, **dadurch gekennzeichnet, dass** als Partikel Aluminiumoxid, Titanoxid, Bornitrid, Zirkonoxid, Siliziumnitrid oder Mischungen hiervon verwendet werden.

5. Verfahren nach Anspruch 1-3, **dadurch gekennzeichnet, dass** die Partikel aus gemahlenem Glas oder aus gemahlener Glaskeramik bestehen.

6. Verfahren nach einem der vorhergehenden Ansprüche, **dadurch gekennzeichnet, dass** den Partikeln Färbpigmente zugesetzt werden.

7. Verfahren nach einem der vorhergehenden Ansprüche, **dadurch gekennzeichnet, dass** den Partikeln Pulver aus gemahlenem Glas oder gemahlener Glaskeramik zugesetzt werden.

8. Verfahren nach Anspruch 5 oder 7, **dadurch gekennzeichnet, dass** das Pulver aus Recyclingmaterial hergestellt wird.

9. Verfahren nach einem der vorhergehenden Ansprüche, **dadurch gekennzeichnet, dass** sich das Aufspritzen der Partikel an einen vorgeschalteten Glühprozess des Körpers (12) anschließt.

10. Verfahren nach Anspruch 9, **dadurch gekennzeichnet, dass** sich das Aufspritzen der Partikel an einen Wärmebehandlungsschritt zur Kristallisation bei der Herstellung von Glaskeramik, an einen Glühprozess bei der Herstellung von vorgespanntem Flachglas, an eine Heißformgebung bei der Herstellung von GK-Grünglas oder an einen Floatprozeß bei der Herstellung von Floatglas anschließt.

11. Verfahren nach einem der vorhergehenden Ansprüche, **dadurch gekennzeichnet, dass** Teile der Oberfläche (14) durch ein Maskierverfahren abgedeckt werden, bevor die Partikel aufgespritzt werden.

12. Verfahren nach einem der vorhergehenden Ansprüche, **dadurch gekennzeichnet, dass** als transparenter Körper (12) eine Glaskeramik-Kochfläche verwendet wird.

13. Verfahren nach einem der Ansprüche 1 bis 11, **dadurch gekennzeichnet, dass** als transparenter Körper eine Floatglasscheibe, insbesondere aus Kalknatronglas, Borosilikatglas oder Aluminosilikatglas verwendet wird.

## Claims

1. A method of producing a light-scattering layer on a transparent body (12), in particular consisting of glass or glass ceramic, wherein optically scattering particles are applied to a surface of the body (12), wherein the particles consist of ceramic, glass or glass ceramic and are applied by thermal spraying onto the body (12) at a maximum layer thickness of 100 µm, **characterized in that** the body is preheated to a temperature of 200 to 450°C, but below the glass transition temperature, before the light-scattering layer is applied.

2. The method of claim 1, **characterized in that** for producing an opaque light-scattering layer the particles are applied with a layer thickness of at least 20 µm, preferably with a layer thickness of 30 to 60 µm, in particular with a layer thickness of 40 to 50 µm.

3. The method of claim 1, **characterized in that** for producing a translucent light-scattering layer (16) the particles are applied with a layer thickness of less than 20 µm.

4. The method of any of the preceding claims, **characterized in that** aluminum oxide, titanium oxide, boron nitride, zirconium oxide, silicon nitride or mixtures thereof are utilized as particles.

5. The method of claims 1 to 3, **characterized in that** the particles consist of ground glass or ground glass ceramic.

6. The method of any of the preceding claims, **characterized in that** color pigments are admixed to the particles.

7. The method of any of the preceding claims, **characterized in that** powder of ground glass or ground glass ceramic is admixed to the particles.

8. The method of claim 5 or 7, **characterized in that** the powder is produced from recycling material.

9. The method of any of the preceding claims, **characterized in that** the spraying of the particles is effected after a prior annealing process of the body (12).

10. The method of claim 9, **characterized in that** the spraying of the particles follows onto a thermal treatment step for a crystallization during manufacture of the glass ceramic, onto an annealing process during the manufacture of prestressed glass sheets, onto the hot forming during the manufacture of GK green glass or onto a floating process during the manufacture of floated glass.

11. The method of any of the preceding claims, **characterized in that** portions of the surface (14) are covered by a masking process, prior to applying the particles by spraying.

12. The method of any of the preceding claims, **characterized in that** a glass ceramic cooktop is utilized as the transparent body.

13. The method of any of claims 1 to 11, **characterized in that** a float glass sheet, in particular consisting of lime soda glass, borosilicate glass, or aluminosilicate glass, is utilized as the transparent body.

## Revendications

1. Procédé de production d'une couche de diffusion de la lumière sur un corps transparent (12) en verre ou en vitrocéramique, pour lequel des particules optiquement diffusantes sont appliquées sur une surface (14) du corps (12), sachant que les particules consistent en de la céramique, du verre ou de la vitrocéramique et sont appliquées sur le corps (12) par pulvérisation thermique sur une épaisseur de couche d'au plus 100 µm, **caractérisé en ce que** le corps est chauffé à une température de 200 à 450 °C, mais cependant en dessous de la température de verre du corps (12), avant que la couche de diffusion de la lumière ne soit appliquée.

2. Procédé selon la revendication 1, **caractérisé en ce que**, pour l'obtention d'une couche opaque de diffusion de la lumière, les particules sont appliquées sur une épaisseur de couche d'au moins 20 µm, de préférence sur une épaisseur de couche de 30 à 60 µm, en particulier sur une épaisseur de couche de 40 à 50 µm.

3. Procédé selon la revendication 1, **caractérisé en ce que**, pour l'obtention d'une couche translucide de diffusion de la lumière (16), les particules sont appliquées sur une épaisseur de couche de moins de 20 µm.

4. Procédé selon l'une quelconque des revendications précédentes, **caractérisé en ce que** comme particules sont utilisés de l'oxyde d'aluminium, de l'oxyde de titane, du nitrure de bore, de l'oxyde de zirconium, du nitrure de silicium ou des mélanges de ceux-ci.

5. Procédé selon les revendications 1 à 3, **caractérisé en ce que** les particules consistent en du verre broyé ou en de la vitrocéramique broyée.

6. Procédé selon l'une quelconque des revendications précédentes, **caractérisé en ce que** des pigments colorés sont additionnés aux particules.

7. Procédé selon l'une quelconque des revendications précédentes, **caractérisé en ce que** des poudres de verre broyé ou de vitrocéramique broyée sont additionnées aux particules.

8. Procédé selon la revendication 5 ou 7, **caractérisé en ce que** la poudre est fabriquée en un matériau de recyclage.

9. Procédé selon l'une quelconque des revendications précédentes,
**caractérisé en ce que** l'application des particules par pulvérisation fait suite à un processus de chauffage au rouge du corps (12) préalable.

10. Procédé selon la revendication 9, **caractérisé en ce que** l'application des particules par pulvérisation fait suite à une étape de traitement thermique pour la cristallisation lors de fabrication de vitrocéramique, à un processus de chauffage au rouge lors de la fabrication de verre plat trempé, à un façonnage à chaud, lors de la fabrication de verre vert vitrocéramique, ou à un processus de flottage lors de la fabrication de verre flotté.

11. Procédé selon l'une quelconque des revendications précédentes, **caractérisé en ce que** des parties de la surface (14) sont recouvertes par un procédé de masquage avant que les particules soient appliquées par pulvérisation.

12. Procédé selon l'une quelconque des revendications précédentes, **caractérisé en ce qu'**une surface de cuisson en vitrocéramique est utilisée comme corps transparent (12).

13. Procédé selon l'une quelconque des revendications 1 à 11, **caractérisé en ce qu'**une glace de verre flotté, en particulier en verre sodocalcique, en verre de borosilicate ou en verre d'aluminosilicate, est utilisée comme corps transparent.
